# EUROPEAN PATENT APPLICATION

(11) **EP 2 418 602 A2**
(43) Date of publication of application: **15.02.2012**
(21) Application number: 11176253.0
(22) Date of filing: 02.08.2011
(51) Int. Cl.: G06F 21/00

(54) **User terminal, method and system for transmitting digital content**

(30) Priority: 13.08.2010 KR 20100078113
(71) Applicant: Pantech Co., Ltd., Seoul 121-270 (KR)
(72) Inventor: Choi, Sung Chul, 121-270 Seoul (KR)
(74) Representative: Herzog, Markus

(57) **Abstract**

A user terminal, a method and a system for transmitting digital content. A user terminal receives digital content from a digital content provider, the digital contents include a digital rights management (DRM) unit to change DRM information of the received digital content; a content processing unit to encode the digital content having the changed DRM information; and a communication unit to transmit the encoded digital content to an external terminal.

## Description

### CROSS-REFERENCE TO RELATED APPLICATION

This application claims priority from and the benefit of Korean Patent Application No. 10-2010-0078113, filed on August 13, 2010, which is hereby incorporated by reference for all purposes as if fully set forth herein.

### BACKGROUND

FIELD

Exemplary embodiments of the present invention relate to a user terminal, a method and a system for transmitting digital content.

DISCUSSION OF THE BACKGROUND

Digital content may include various kinds of content, for example, e-books, downloadable music/movie files and the like. An e-book, also known as an electronic book, is a digital book which is recorded in an electronic recordable medium. A user may purchase an e-book and download the content of the book in a user terminal. A content provider may apply digital rights management (DRM) to e-books. In particular, the content provider generally does not permit liquidity in DRM. Thus, the user cannot share digital content with other users or assign the digital content to other users. This inconvenience may occur for companies as well as for individuals.

### SUMMARY OF THE INVENTION

Exemplary embodiments of the present invention provide a user terminal, a method, and a system for transmitting digital content in which a user may purchase digital content such as e-books and apply, to the digital content, various kinds of functions including repurchasing, sharing, assigning, and the like.

Additional features of the invention will be set forth in the description which follows, and in part will be apparent from the description, or may be learned by practice of the invention.

An exemplary embodiment of the present invention discloses a user terminal to transmit digital content provided by a content provider, and may include a digital rights management (DRM) unit to change DRM information; a content processing unit to encode the provided digital content having the changed DRM information; and a communication unit to transmit the encoded digital content to a first external terminal.

Another exemplary embodiment of the present invention discloses a method to transmit digital content, including changing digital rights management (DRM) information of digital content provided by a digital content provider; encoding the digital content having the changed DRM information; and transmitting the encoded digital content to a first external terminal.

Another exemplary embodiment of the present invention discloses a system for transmitting digital content, including a digital content provider to provide digital content; and a user terminal to receive the digital content from the digital content provider, to change digital rights management (DRM) information of the received digital content, and to transmit the digital content having the changed DRM information; and a first external terminal to receive the digital content having changed DRM information.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 depicts an illustrative system for transmitting digital content according to an exemplary embodiment.

FIG. 2 depicts an illustrative structure of digital content having an initial digital rights management (DRM) area according to an exemplary embodiment.

FIG. 3 depicts an illustrative DRM area according to an exemplary embodiment.

FIG. 4 depicts an illustrative DRM area according to an exemplary embodiment.

FIG. 5 depicts an illustrative DRM area according to an exemplary embodiment.

FIG. 6 depicts an illustrative DRM area according to an exemplary embodiment.

FIG. 7 depicts an illustrative DRM area according to an exemplary embodiment.

FIG. 8 depicts an illustrative DRM area according to an exemplary embodiment.

FIG. 9 is a flowchart illustrating a method for transmitting digital content by a first user terminal according to an exemplary embodiment.

FIG. 10 is a flowchart illustrating a method for purchasing and transmitting digital content based on DRM information extension according to an exemplary embodiment.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

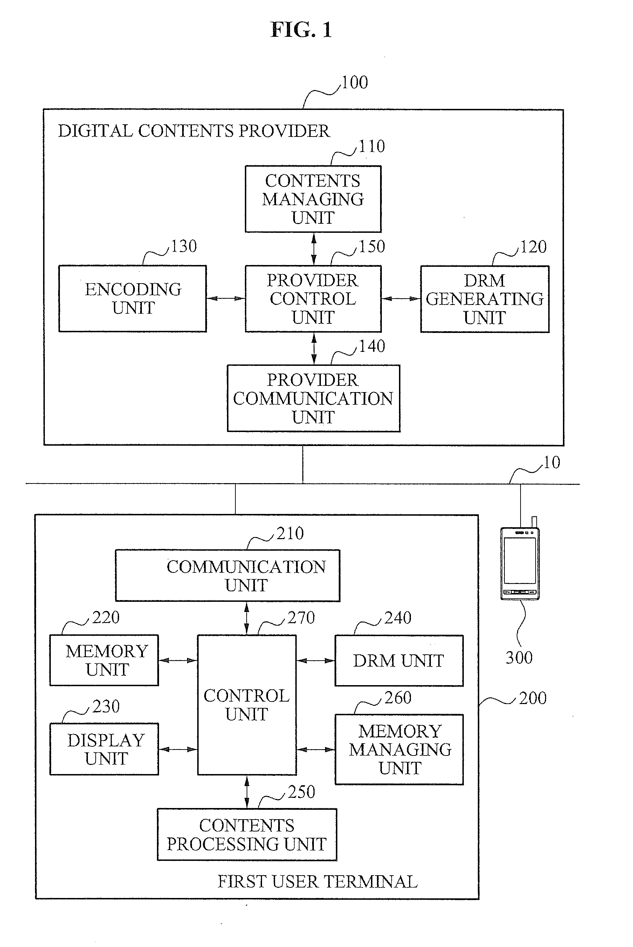

FIG. 1 depicts an illustrative system for transmitting digital content according to an exemplary embodiment.

Referring to FIG. 1, the system 5 for transmitting digital content may include a digital content provider 100, a first user terminal 200 and a second user terminal 300. Although FIG. 1 shows two user terminals, the first user terminal 200 and the second user terminal 300, aspects of the present invention are not limited to a specific number of user terminals. A user of the first user terminal 200 may be identical to or different from a user of the second user terminal 300.

The first user terminal 200 may purchase digital content from the digital content provider 100 and transmit the purchased digital content to an external terminal, here, second user terminal 300. The digital content may be transmitted from the first user terminal 200 to the second user terminal 300 without intervention of the digital content provider 100. Although described as purchased, digital content may be provided to or received by the first user terminal as a gift or loan.

To enable digital content transmission without intervention of the digital content provider 100, the digital content provider 100 may add a digital rights management (DRM) area to the digital content and record DRM information related to purchasing in the DRM area. The first user terminal 200 may change the DRM information of the purchased digital content and transmit the digital content having the changed DRM information to the second user terminal 300. According to an exemplary embodiment, digital content may have a broad range of application using DRM information extension. For example, DRM information extension may be a series of processes for changing DRM information of purchased digital content through a user terminal to rent, transfer or assign the digital content of the user terminal to an external terminal.

The digital content provider 100 may include a content managing unit 110, a DRM generating unit 120, an encoding unit 130, a provider communication unit 140, and a provider control unit 150.

The content managing unit 110 may store and manage a plurality of available digital content sales. The content managing unit 110 may store and manage digital content in the form of a file.

The DRM generating unit 120 may generate DRM information using a purchase condition of the first user terminal 200. Specifically, the DRM generating unit 120 may generate DRM information including a selling condition of the digital content and a purchase condition of the digital content. The generated DRM information may be added to the digital content.

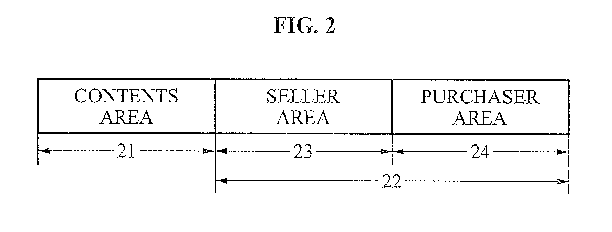

FIG. 2 depicts an illustrative structure of digital content having an initial DRM area according to an exemplary embodiment.

Referring to FIG. 2, the structure of digital content may include a content area 21 and an initial DRM area 22, and the initial DRM area 22 may include a seller area 23 and a purchaser area 24.

The content area 21 is an area for digital content purchased by a purchaser. For example, if the purchaser purchases an e-book, the content area 21 may have the content of the e-book recorded therein.

The initial DRM area 22 is an area for DRM information generated by the DRM generating unit 120. A selling condition may be recorded in the seller area 23 and a purchase condition may be recorded in the purchaser area 24. The seller area 23 may not be changeable by the DRM unit 240 of the first user terminal 200 whereas the purchaser area 24 may be changeable by the DRM unit 240.

The selling condition may be set by a manager for each digital content, regardless of the purchase condition. The manager may be a manager of the digital content provider 100 or an owner of rights. A user may purchase digital content under the selling condition. The selling condition may be changed by the manager of the digital content provider 100. The selling condition may be selectively changed by the manager in response to a request of a purchaser or according to the purchase condition of digital content.

Specifically, at least one of detailed information of digital content, the number of licenses of digital content, a transmissible number of digital content, a copyable number of digital content, and an assignable number of digital content may be recorded in the seller area 23.

The purchase condition may be set by a user that purchased digital content. At least one of information of a first purchaser of digital content, information of a current owner of digital content, the number of currently owned licenses of digital content, the number of currently withdrawable licenses of digital content, a transmissible number of digital content, a copyable number of digital content, an assignable number of digital content, and a rental period of digital content may be recorded in the purchaser area 24.

Information recorded in the seller area 23 and the purchaser area 24 is described with reference to Table 1.

**Table 1**

| | Information | Description or Example |
|---|---|---|
| Seller area | Detailed information of digital content | General information including product ID (title, serial number), writer, price, name of selling place, and the like |
| | Number of licenses of digital content | Purchase quantity of identical digital content |
| | Transmissible number of digital content | Maximum number of digital content transmittable by a first purchaser |
| | Maximum transmissible number per time of digital content | Maximum transmittable depth number of digital content (for example, 1 depth denotes a case where a first purchaser transmits digital content to a first user, and 2 depth denotes a case where the first user transmits the digital content to a second user) |
| | Copyable number of digital content | Maximum copyable number of digital content by a first purchaser |
| | Assignable number of digital content | Maximum assignable number of digital content by a first purchaser |
| Purchaser area | Information of first purchaser of digital content | Identity information of a first user terminal or a first user of digital content |
| | Information of a current owner of digital content | A current owner is a first user when a first purchaser transmits digital content to the first user |
| | Number of currently owned licenses of digital content | Number of licenses changes depending on the number of transmission of digital content. |
| | Number of currently withdrawable licenses of digital content | Number of digital content transmitted to an external terminal |
| | Transmissible number of digital content | Decrease when digital content are transmitted to an external terminal |
| | Copyable number of digital content | Decrease when digital content are copied to an external terminal |
| | Assignable number of digital content | Decrease when digital content are assigned to an external terminal |
| | Rental period of digital content | Unlimited or until x day, x month, x year |

In Table 1, the number of licenses is a purchased quantity of identical digital content, for example, the number of licenses is three when three identical e-books are purchased. That is, the first user terminal 200 may obtain three licenses from the digital content provider 100 in one download. This is similar to the concept that multiple identical books may be purchased in a brick and mortar bookstore. The DRM information of Table 1 may be information for a single digital content.

Referring again to FIG. 1, the encoding unit 130 may encode digital content having DRM information generated by the DRM generating unit 120. The encoding unit 130 may encode digital content using certification information of the first user terminal 200 in response to a purchase request of a purchaser. The certification information may include at least one of a unique number and a personal certificate of the first user terminal 200, and the unique number of the first user terminal may be, for example, an international mobile equipment identity (IMEI) number. The IMEI number may be a serial number of the first user terminal 200 assigned by a manufacturer.

The provider communication unit 140 may transmit the encoded digital content from the encoding unit 130 to the first user terminal 200 via a communication network 10.

The provider control unit 150 may control the operation of the digital content provider 100 using a control program, software, a processor, etc. For example, the provider control unit 150 may perform a charging process using certification information, and may control the encoding unit 130 to encode the digital content using the certification information if the charging process is completed.

The first user terminal 200 may further include a communication unit 210, a memory unit 220, a display unit 230, a DRM unit 240, a content processing unit 250, a memory managing unit 260 and a control unit 270.

The first user terminal 200 may purchase digital content from the digital content provider 100 and transmit the purchased digital content to the second user terminal 300.

The communication unit 210 may support a wired or wireless communication between the digital content provider 100 and the first and second user terminals 200 and 300, respectively. For example, the communication unit 210 may receive the purchased digital content from the digital content provider 100.

The control unit 270 may control the operation of the first user terminal 200 using a control program, software, a processor, etc.

The memory unit 220 may store the digital content purchased from the digital content provider 100 in the form of a file. Throughout the specification, the term "digital content" is used interchangeably with "file," for convenience. In addition, the memory unit 220 may store various kinds of programs for operating the first user terminal 200.

The display unit 230 may display a user interface (UI) used to provide various functions of the first user terminal 200, the current status of the first user terminal 200, etc. In particular, the display unit 230 may display a file list of digital content stored in the memory unit 220. In this instance, the file list may include effective files. For example, if digital content stored in the memory unit 220, however, is not available in the first user terminal 200 as the digital content was transmitted to the second user terminal 300, a file name of the digital content may not be displayed. In this instance, 'transmission' may be an operation related to movement of digital content, for example, transfer, copying, assignment, and the like. The transmitted digital content may be withdrawn from the second user terminal 300.

The DRM unit 240 may change DRM information of digital content. The DRM unit 240 may change DRM information based on the initial DRM area 22 in FIG. 2 that is added to the digital content if the digital content are purchased.

The DRM unit 240 may analyze information in the seller area 23 of the DRM area 22 included in the purchased digital content, that is, a selling condition, and manage a file transmission condition. The file transmission condition may be included in a purchase condition, or may be the purchase condition. If digital content, that is, a file is transmitted to the second user terminal 300, the DRM unit 240 may change the purchase condition stored in the purchaser area 24, and store DRM information including the changed purchase condition in the digital content. Also, if the digital content transmitted to the second user terminal 300 is withdrawn, the DRM unit 240 may again change the DRM information of the withdrawn digital content.

The content processing unit 250 may encode or decode digital content received by the communication unit 210. The content processing unit 250 may decode digital content using certification information. If the digital content provider 100 encoded the digital content using a unique number of the first user terminal 200, the content processing unit 250 may decode the digital content using the unique number.

The content processing unit 250 may analyze information received from the second user terminal 300, for example, if the purchased digital content are transmitted to the second user terminal 300. The information of the second user terminal 300 may be a unique number and/or a personal certificate of the second user terminal 300. The content processing unit 250 may encode the digital content including DRM information changed by the DRM unit 240 using the information received from the second user terminal 300.

The memory managing unit 260 may store, delete, and change the status of the digital content, for example, if DRM information is changed by the DRM unit 240 or the digital content are encoded by the content processing unit 250. In particular, if the encoded digital content is transmitted to the second user terminal 300, the memory managing unit 260 may perform a locking operation to disable usage of the corresponding digital content in the first user terminal, and set the status of the digital content as DISABLE. Also, if the digital content is withdrawn from the second user terminal 300, the memory managing unit 260 may release the locking of the digital content and set the status of the digital content as ENABLE.

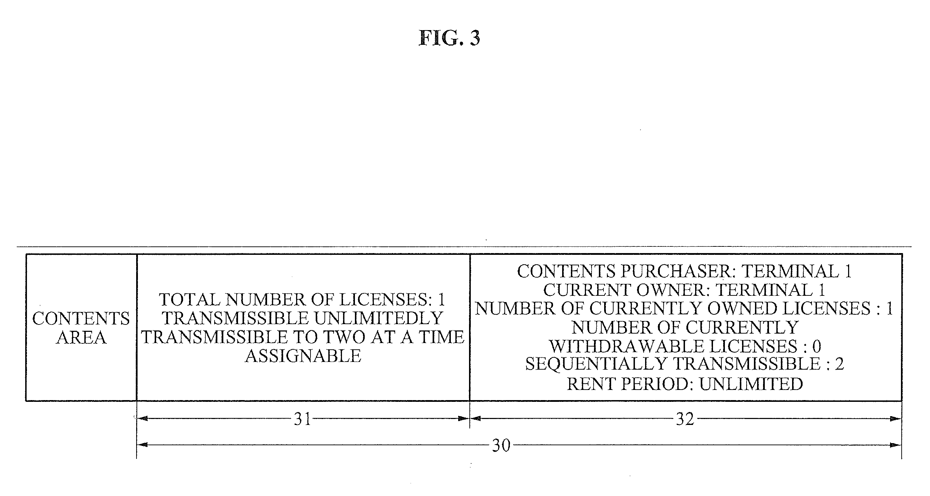

Hereinafter, a DRM area before and after being changed is described with reference to FIGS. 3 to 5.

Digital content, which is first purchased by and stored in an exemplary first user terminal, may be referred to as first digital content, and the first digital content is transmitted to an exemplary second user terminal. The first digital content stored in the second user terminal may be referred to as second digital content. The DRM unit of an exemplary first user terminal changes the DRM information of the first digital content if the first digital content is transmitted. The first digital content having DRM information changed by the exemplary DRM unit may be referred to as "first prime digital content." The DRM information of the second digital content may be also changed by an exemplary DRM unit. In this instance, the DRM information of the second digital content may be different from the DRM information of the first prime digital content.

FIG. 3 depicts an illustrative DRM area according to an exemplary embodiment. FIG. 3 illustrates an example of DRM information in a seller area 31 and a purchaser area 32 of an initial DRM area 30 that is added to digital content when the digital content is purchased. The initial DRM area 30 may be produced by the digital content provider 100, included in the digital content and transmitted to the first user terminal 200. Accordingly, purchasing of the digital content is completed.

The selling condition recorded in the seller area 31 shows that the number of purchasable licenses of the digital content is '1', the digital content is unlimitedly transmittable and transmittable at the maximum to two persons per time, and is assignable.

The purchase condition recorded in the purchaser area 32 shows that a purchaser of the digital content is a Terminal 1', a current owner of the digital content is the 'Terminal 1', the number of currently owned licenses is '1', the number of currently withdrawable licenses is '0', a sequentially transmissible number of the digital content is '2', and a rental period of the digital content is unlimited.

If the number of currently withdrawable licenses is '0', the digital content has not yet been transmitted to another user terminal. If the sequentially transmissible number is '2', the digital content may be transmitted at maximum to two users. Thus, if a user A transmits the digital content to a user B, the sequentially transmissible number is decreased to 1'. If the user B transmits the same digital content to a user C, the sequentially transmissible number is decreased to '0' and the digital content may not be transmitted any longer and should be withdrawn. The rental period may be set by a user of a terminal possessing the digital content. However, aspects of the present invention need not be limited thereto, such that, a sequentially transmissible number of '2,' if transmitted from user A to user B, may be provide user B with the right to transmit the digital content to two users. In addition, the two users, which received digital content from B, may be provided with the right to transmit the digital content to two users each.

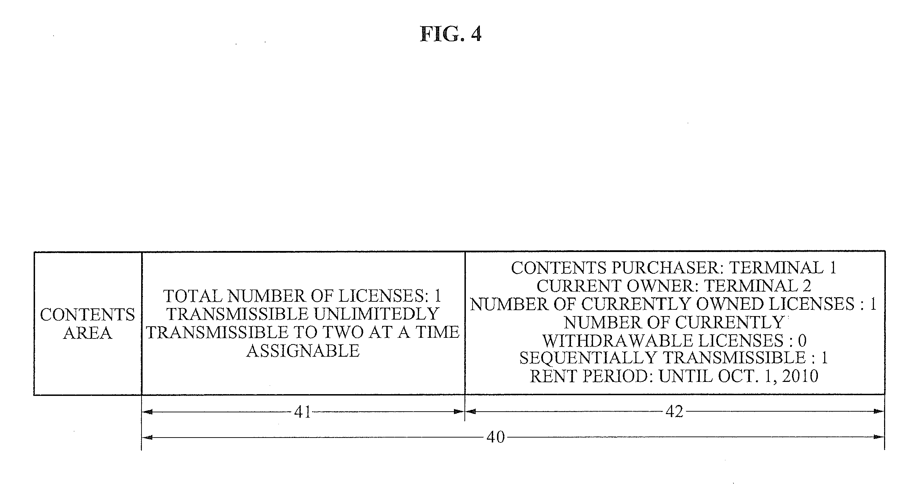

FIG. 4 depicts an illustrative DRM area included in digital content transmitted from an exemplary first user terminal to an exemplary second user terminal, as taught herein. The DRM information of FIG. 4 may be DRM information resulting from the change of DRM information stored in the initial DRM area 30 of FIG. 3.

Referring to FIG. 4, a DRM area 40 of digital content transmitted to the exemplary second user terminal may have a seller area 41 and a purchaser area 42. The seller area 41 may be the same as when the digital content is first purchased by the exemplary first user terminal.

The purchaser area 42 shows that the purchaser of the digital content is 'Terminal 1,' and a current owner is 'Terminal 2.' The number of currently owned licenses and the number of currently withdrawable licenses is '1' and '0', respectively, because the digital content is rented from the first user terminal. The purchase condition of the purchaser area 42 may be a purchase condition resulting from change of the purchase condition of the purchaser area 32 by the DRM unit 240 of the first user terminal.

The sequentially transmissible number is '1,' and if the purchase condition is the result of a change in the purchase condition of area 32, the second user terminal may transmit the digital content to an external terminal once.

If the first user terminal sets a rental period and transmits the digital content to the second user terminal, the digital content stored in the second user terminal may be deleted at the expiration of the rental period. After the rental period expires, the state of the digital content previously set as DISABLE by the first user terminal may be changed to ENABLE, making the digital content available to the first user terminal. Because the rental period of the digital content is set as October 1, 2010 in FIG. 4, the second user terminal should return the digital content to the first user terminal on or by October 1, 2010.

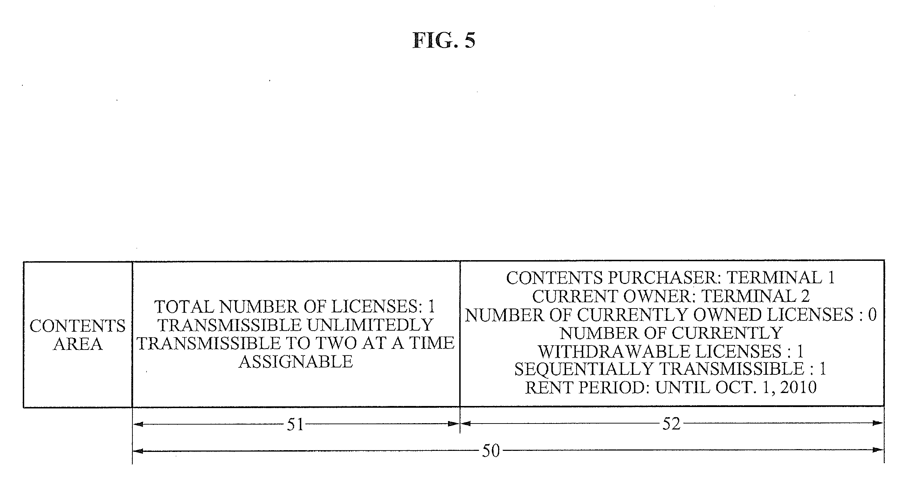

FIG. 5 depicts an illustrative DRM area according to an exemplary embodiment.

FIG. 5 depicts an illustrative DRM area in an exemplary first user terminal when the digital content is transmitted to an exemplary second user terminal. For example, the changed DRM information of FIG. 5 may be information included in the digital content stored in the first user terminal 200.

Referring to FIG. 5, as the digital content is transmitted to the second user terminal, a DRM area 50 of the digital content stored in the first user terminal may have a seller area 51 and a purchaser area 52. The seller area 51 may be the same as if a user of the first user terminal initially purchases the digital content.

The purchaser area 52 shows that a purchaser of the digital content is 'Terminal 1' and a current owner is 'Terminal 2.' The number of currently owned licenses is '0' and the number of currently withdrawable licenses is '1' indicating that the digital content was rented or transmitted to a second user terminal. The purchase condition of the purchaser area 52 may be a purchase condition resulting from the change of the purchase condition of the purchaser area 32 of FIG. 3 by an exemplary DRM unit.

The first user terminal may no longer transmit the digital content because the number of currently owned licenses is '0.'

If a rental period is unlimited, the transmitted digital content should be removed from the first terminal, and if the digital content is transmitted to the second user terminal, the digital content stored in the first user terminal may be deleted. Conversely, if a rental period is set for a predetermined time, the digital content stored in the first user terminal may not be deleted, but may be in a DISABLE state, i.e., in a locked state, as described above. The DISABLE state is to prepare for a situation in which the digital content may not be normally withdrawn from the second user terminal.

If the first user terminal assigns the digital content to the second user terminal, the digital purchaser of FIG. 4 and FIG. 5 may be changed to a `Terminal 2' and the digital content in the first user terminal may be deleted.

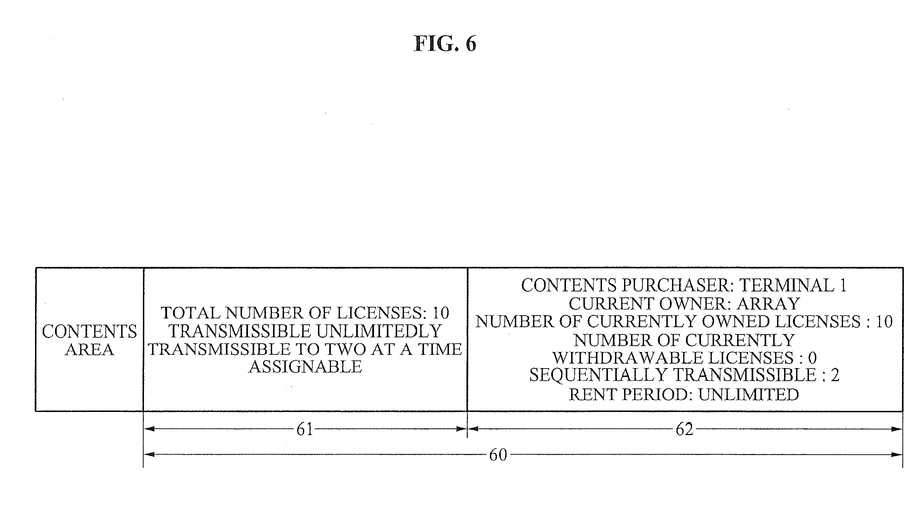

A DRM area to be changed, if a plurality of licenses are purchased, and the digital content transmitted to a plurality of external terminals is described with reference to FIG. 6 to FIG. 8.

FIG. 6 depicts an illustrative DRM area according to an exemplary embodiment.

FIG. 6 depicts an illustrative initial DRM area 60 that is added to digital content if the digital content is purchased. The initial DRM area 60 may be made by an exemplary digital content provider, included in the digital content, and transmitted to an exemplary first user terminal.

The selling condition recorded in the seller area 61 shows that the number of purchasable licenses of the digital content is '10', the digital content is transmissible unlimitedly, transmissible at a maximum to two persons at a time, and is assignable.

The purchase condition recorded in the purchaser area 62 shows that a purchase of the digital content is a 'Terminal 1', a current owner of the digital content is 'ARRAY', the number of currently owned licenses is '10', the number of currently withdrawable licenses is '0', a sequentially transmissible number is '2', and the rental period of the digital content is unlimited.

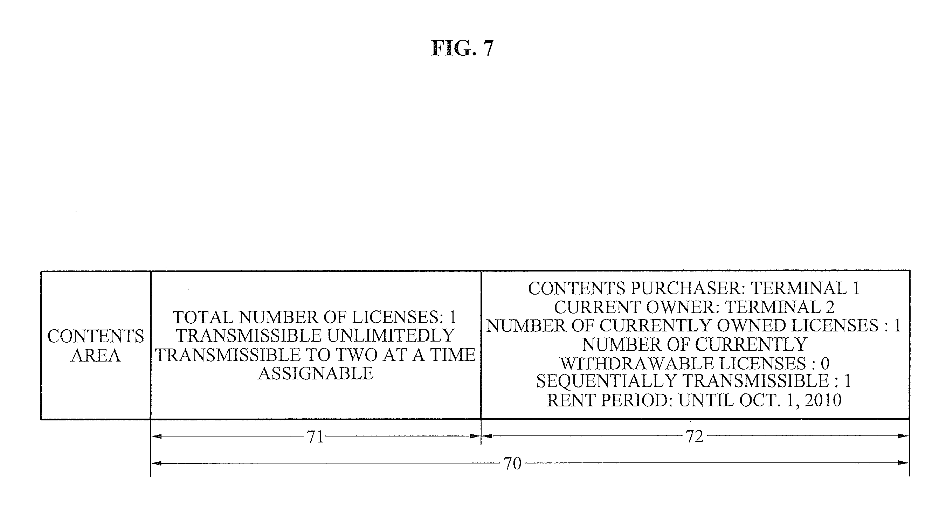

FIG. 7 depicts an illustrative DRM area according to an exemplary embodiment. FIG. 7 depicts an illustrative DRM area included in the digital content transmitted from an exemplary first user terminal to an exemplary second user terminal.

A DRM area 70 of the digital content transmitted to the second user terminal may have a seller area 71 and a purchaser area 72. The seller area 71 may be the same as if the first user terminal initially purchased the digital content. The purchaser area 72 shows that a purchaser of the digital content is 'Terminal 1,' and a current owner is 'Terminal 2.' The number of currently owned licenses is '1' and the number of currently withdrawable licenses is '0.' The sequentially transmissible number is '1' and a rental period is set to expire on October 1, 2010.

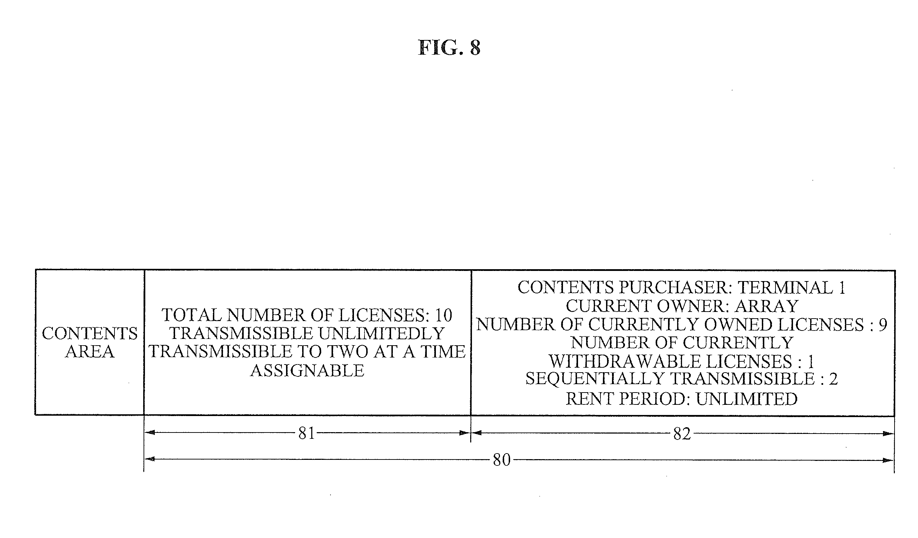

FIG. 8 depicts an illustrative DRM area according to an exemplary embodiment. FIG. 8 illustrates an example of changed DRM information of the digital content stored in an exemplary first user terminal if the digital content is transmitted to an exemplary second user terminal.

Referring to FIG. 8, a DRM area 80 of the digital content stored in a first user terminal may have a seller area 81 and a purchaser area 82. The seller area 81 may be the same as when the first user terminal initially purchased the digital content. The purchaser area 82 shows that a purchaser of the digital content is 'Terminal 1,' and a current owner an 'Array.' In an exemplary embodiment, the Array may include multiple terminals, for example, ten terminals, one of which may be "Terminal 2." The number of currently owned licenses is '9' and the number of currently withdrawable licenses is '1.' The sequentially transmissible number is '2' and a rental period is unlimited. As digital content (for example, one e-book) is rented to a second user terminal as shown in FIG. 8, the digital content stored in the first user terminal should be deleted or changed to a DISABLE state. Also, if a rental period is unlimited, the digital content stored in the first user terminal should be deleted.

However, if a plurality of licenses are purchased as shown in FIG. 6, the digital content may not be deleted from the first user terminal until the number of currently owned licenses decreases to '0', and the purchase condition of the digital content may be changed as follows.

As shown in FIG. 6, a current owner of the initial DRM information is an Array having 10 licenses. If the digital content is transmitted to the second user terminal of the Array, the current owner may be changed to a 'Terminal 2' and the number of currently owned licenses and the number of currently withdrawable licenses may be changed to '9' and '1', respectively. If the digital content is transmitted to an external terminal, the number of currently owned licenses may decrease and the number of currently withdrawable licenses may increase as shown in FIG. 8. If the number of currently owned licenses becomes '1', it indicates that the digital content was transmitted nine times.

In this instance, if the digital content with a predetermined rental period is transmitted once or more, the digital content may not be deleted from the first user terminal and may maintain a DISABLE state. Also, if the digital content is assigned to the second user terminal, the number of currently owned licenses and the number of currently withdrawable licenses may be adjusted and the rights corresponding to the digital content may be given to the second user terminal. The second user terminal may rent or assign the assigned digital content to an external terminal in the same way as the first user terminal.

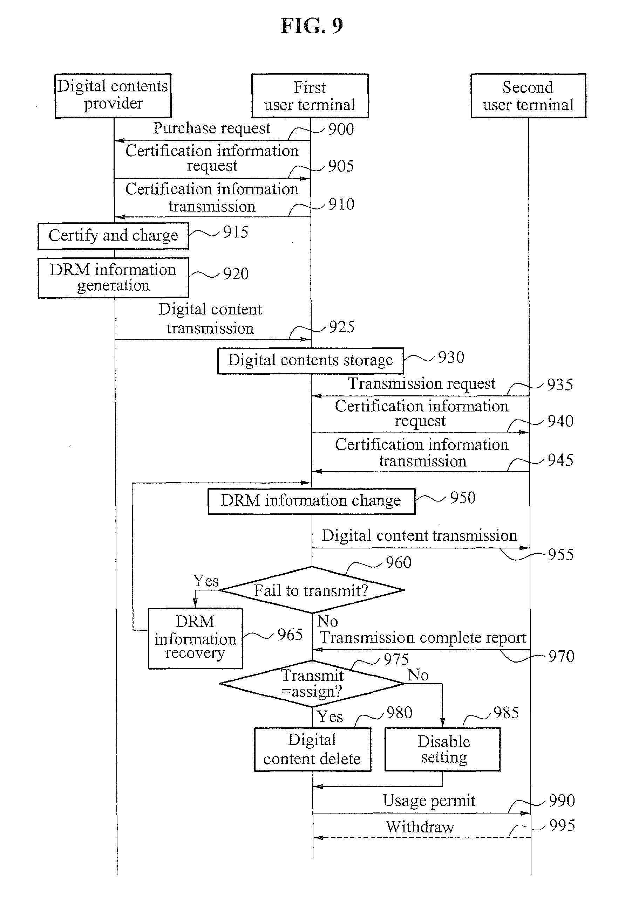

FIG. 9 is a flowchart illustrating a method for transmitting digital content by a first user terminal according to an exemplary embodiment of the present disclosure. Although depicted as being performed serially, those skilled in the art will appreciate that at least a portion or portions of the method of FIG. 9 may be performed contemporaneously, or in a different order than presented in FIG. 9.

A first user terminal, which may transmit digital content using DRM information extension and extended DRM information, may be the exemplary first user terminal 200 described with reference to FIG. 1. The method of FIG. 9 may be performed by the control unit 270 of the first user terminal 200 of FIG. 2 or by a processor. A digital content provider and a second user terminal may be the digital content provider 100 and the second user terminal 300 of FIG. 1, respectively.

In operation 900, the first user terminal sends a purchase request, to the digital content provider.

In operation 905, the digital content provider requests certification information from the first user terminal.

In operation 910, the first user terminal transmits a unique number of the first user terminal or a personal certificate, or a combination thereof, as the certification information to the digital content provider.

In operation 915, the digital content provider performs a certifying and charging process using the certification information.

In operation 920, the digital content provider generates DRM information, by way of example DRM information using a purchase condition established by the user of the first user terminal.

In operation 925, the digital content provider encodes the digital content including the DRM information generated in operation 920 and transmits the encoded digital content to the first user terminal. Accordingly, the sale and purchase of the digital content is completed.

In operation 930, the first user terminal stores the purchased digital content in the first user terminal.

In operation 935, the second user terminal requests the first user terminal transmit the digital content. In this instance, transmission is an operation related to movement of digital content, for example, transfer, copying, assignment, etc.

In operation 940, the first user terminal requests certification information from the second user terminal.

In operation 945, the second user terminal transmits a unique number of the second user terminal or a personal certificate, or a combination thereof, as the certification information to the first user terminal.

In operation 950, the first user terminal performs a certification process using the certification information received from the second terminal, checks the DRM information, and determines whether the digital content is transmissible. In operation 950, the first user terminal may change DRM information of digital content to be stored in the first user terminal and DRM information of digital content to be transmitted to the second user terminal, if the digital content is transmissible. The DRM information may be changed based on the purchase condition, for example, the number of licenses at the time of purchasing, the number of currently owned licenses, assignability, etc.

In operation 955, the first user terminal transmits the digital content having the changed DRM information to the second user terminal.

In operation 960, the first user terminal determines if the digital content transmission of operation 955 failed.

In operation 965, if the operation 960 determined the transmission was a failure, the first user terminal recovers the DRM information changed in operation 950 to a previous state.

In operation 970, if the first user terminal receives a transmission complete report from the second user terminal, the first user terminal determines transmission of the digital content was successful.

In operation 975, the first user terminal determines if operation 955 was an assignment of the transmitted digital content.

In operation 980, if the operation 975 determines the transmission of the digital content was an assignment of the digital content to the second terminal, the first user terminal may delete the digital content stored in operation 930.

In operation 985, if the operation 975 determines the transmission of the digital content was a rental of the digital content, the first user terminal may set the state of the digital content stored in operation 930 as DISABLE and may apply the DRM information changed in operation 950 to the digital content stored in operation 930.

In step 990, the first user terminal transmits usage permission to the second user terminal if a license transfer is completed. Accordingly, the DRM information of the digital content transmitted to the second user terminal is extended, so that the second user terminal may use the digital content.

In operation 995, the digital content is withdrawn from the second user terminal if a rental period of the DRM information extended in operation 990 expires. Operation 995 may not be performed if transmission of the digital content in operation 955 is assignment of the digital content.

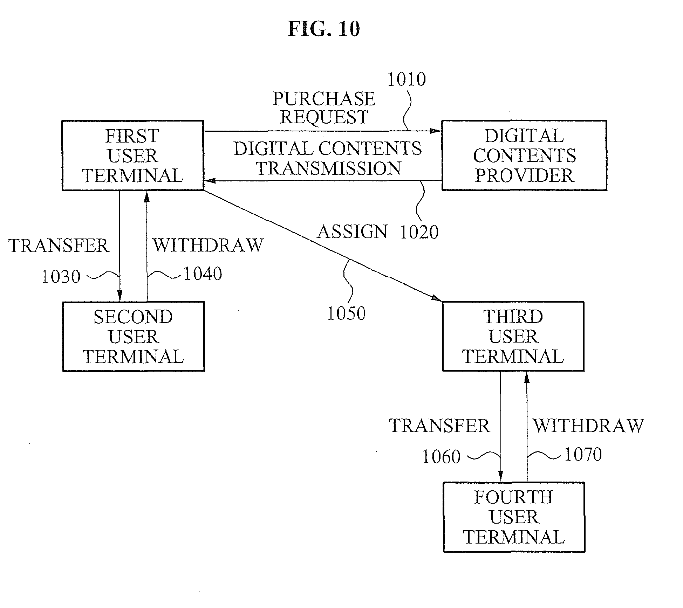

FIG. 10 is a flowchart illustrating a method for purchasing and transmitting digital content based on DRM information extension according to an exemplary embodiment. Although depicted as being performed serially, those skilled in the art will appreciate that at least a portion or portions of the method of FIG. 10 may be performed contemporaneously, or in a different order than presented in FIG. 10

In an exemplary embodiment, the digital content provider, first user terminal, second user terminal, third user terminal and fourth user terminals may respectively be the digital content provider 100, the first user terminal 200, the second user terminal 300 and external terminals with reference to FIG. 1 to FIG. 9.

In operation 1010, the first user terminal informs the digital content provider of desired digital content to retrieve and requests to purchase the retrieved digital content. A user of the first user terminal may establish a purchase condition for the retrieved digital content, by way of example, the number of licenses of the digital content is one, a transmissible number of the digital content is five, the digital content is assignable, etc.

In operation 1020, the digital content provider generates DRM information using the purchase condition set by the user of the first user terminal, and transmits the digital content including the generated DRM information to the first user terminal. The digital content provider certifies and encodes the digital content, using certification information of the first user terminal, and transmits the encoded digital content to the first user terminal.

In operation 1030, the first user terminal transmits the purchased digital content to the second user terminal. In this instance, the first user terminal may transmit the purchased digital content for rental. The first user terminal checks certification information of the second user terminal, determines whether to change the DRM information, and if the digital content is transmissible. If the digital content is transmissible, the first user terminal encodes the digital content using the certification information from the second user terminal, and transmits the encoded digital content to the second user terminal. The digital content stored in the first user terminal may be deleted or set to a DISABLE state, and the second user terminal may use the digital content.

In operation 1040, the digital content is withdrawn and returned to the first user terminal if the rental period of the digital content transmitted to the second user terminal expires.

In operation 1050, the first user terminal may transmit the digital content to multiple terminals. In this instance, the digital content stored in the first user terminal may not be deleted, but the DRM information of the digital content may be changed.

In other words, in operation 1050, the first user terminal may transmit the purchased digital content to the third user terminal based on the DRM information. The first user terminal may assign the digital content to the third user terminal if an 'assignable' purchase condition is included in the DRM information generated and transmitted in operation 1020.

In operation 1060, the third user terminal transmits the assigned digital content to the fourth user terminal.

In operation 1070, the digital content may be returned to the third user terminal if the rental period of the digital content transmitted to the fourth user terminal expires. The digital content stored in the fourth user terminal may be deleted, and the DRM information (for example, the number of currently owned licenses) of the digital content stored in the third user terminal may be changed accordingly.

Exemplary embodiments of the present disclosure may include transfer and purchase of programs purchased from application stores as well as digital content, such as e-books, music files and movie files. For example, the programs purchased from application stores may be transmitted or withdrawn according to aspects of the present disclosure. Also, exemplary embodiments of the present disclosure may be applied to various kinds of content depending on a file encoding range.

Exemplary embodiments according to aspects of the present disclosure may be recorded in non-transitory, computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts.

Exemplary embodiments of the present disclosure provide a user terminal, a method, and a system for transmitting digital content, in which a user may provide other users with digital content purchased by the user from a digital content provider. In this instance, the user may change digital rights management (DRM) information of the digital content without intervention of the digital content provider and transmit the digital content having the changed DRM information to the other users, thus providing digital content to other users more conveniently.

Furthermore, exemplary embodiments of the present disclosure provide a user terminal, a method, and a system for transmitting digital content, in which digital content may be transmitted between user terminals. Digital content transmission may be made under a concept of transfer and withdrawal as opposed to unauthorized copying, thereby increasing management efficiency of the digital content.

In addition, exemplary embodiments of the present disclosure provide a user terminal, a method and a system for transmitting digital content, in which a digital content provider may set various conditions including transmissibility of digital content, the number of licenses of digital content, a rental period of digital content and the like. The method and the system for transmitting digital content may allow competition between digital content providers, leading to a more active digital content market. For example, a company A may provide digital content at a low price and having limited transmissibility, and a company B may provide digital content at a high price and having unlimited transmissibility.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

Item 1. A user terminal to transmit digital content provided by a digital content provider, comprising: a digital rights management (DRM) unit to change DRM information of the provided digital content; a content processing unit to encode the provided digital content having the changed DRM information; and a communication unit to transmit the encoded digital content to a first external terminal.

Item 2. The user terminal of item 1, wherein the DRM unit comprises an initial DRM area that is added to the digital content by the digital content provider.

Item 3. The user terminal of item 2, wherein the initial DRM area comprises a changeable purchaser area and a non-changeable seller area, and the DRM unit changes DRM information recorded in the changeable purchaser area.

Item 4. The user terminal of item 3, wherein the seller area comprises at least one of: detailed information about the digital content, a purchase quantity of the digital content, a transmissible number of the digital content, or an assignable number of the digital content, and combinations thereof.

Item 5. The user terminal of item 3 or 4, wherein the purchase area comprises at least one of: information of a first purchaser of the digital content, information of a current owner of the digital content, the number of currently owned digital content, the number of currently withdrawable digital content, a transmissible number of the digital content, an assignable number of the digital content, or a rental period of the digital content, and combinations thereof.

Item 6. The user terminal of any of items 3 to 5, wherein the first external terminal transmits the received encoded digital content to a second external terminal.

Item 7. The user terminal of any of items 1 to 6, wherein the encoded digital content is copied, transmitted and assigned to a second external terminal and is withdrawn from the first external terminal.

Item 8. The user terminal of any of items 1 to 7, further comprising: a memory managing unit to perform a locking operation to disable usage of the digital content by the user terminal if the encoded digital content is transmitted to the first external terminal.

Item 9. The user terminal of any of items 1 to 8, wherein the DRM unit changes the changed DRM information if the encoded digital content is withdrawn from the first external terminal.

Item 10. The user terminal of any of items 1 to 9, wherein the user terminal obtains a plurality of licenses for the digital content from the digital content provider in one download.

Item 11. The user terminal of any of items 1 to 10, wherein the digital content provider encodes the digital content using at least one of a unique number or a personal certificate of the user terminal.

Item 12. The user terminal of any of items 1 to 11, wherein the content processing unit encodes the digital content using at least one of a unique number or a personal certificate of the first external terminal.

Item 13. A method for transmitting digital content, the method comprising: changing digital rights management (DRM) information of digital content provided by a digital content provider; encoding the digital content having the changed DRM information; and transmitting the encoded digital content to a first external terminal.

Item 14. The method of item 13, wherein the DRM information comprises an initial DRM area that is added to the digital content by the digital content provider.

Item 15. The method of item 14, wherein the initial DRM area further comprises a changeable purchaser area and a non-changeable seller area, and changing DRM information comprises changing DRM information recorded in the changeable purchaser area.

Item 16. The method of item 15, wherein the seller area comprises at least one of: detailed information of the digital content, a purchase quantity of the digital content, a transmissible number of the digital content, or an assignable number of the digital content, and combinations thereof.

Item 17. The method of item 15 or 16, wherein the purchase area comprises at least one of: information of a first purchaser of the digital content, information of a current owner of the digital content, the number of currently owned digital content, the number of currently withdrawable digital content, a transmissible number of the digital content, an assignable number of the digital content, or a rental period of the digital content, and combinations thereof.

Item 18. The method of any of items 13 to 17, wherein the encoded digital content is copied, transmitted and assigned to a second external terminal and is withdrawn from the first external terminal.

Item 19. The method of any of items 13 to 18, further comprising: performing a locking operation to disable usage of the digital content if the encoded digital content is transmitted to the first external terminal.

Item 20. The method of any of items 13 to 19, further comprising: changing the changed DRM information if the encoded digital content is withdrawn from the first external terminal.

Item 21. The method of any of items 13 to 20, wherein a plurality of licenses of the digital content are obtained from the digital content provider in one download, the number of licenses denoting a provided quantity of the digital content.

Item 22. The method of any of items 13 to 21, wherein the digital content provider encodes the digital content using at least one of a unique number or a personal certificate of a user terminal receiving the digital content from the digital content provider.

Item 23. The method of any of items 13 to 22, wherein the encoding of the digital content comprises encoding the digital content using at least one of a unique number or a personal certificate of the first external terminal.

Item 24. A system for transmitting digital content, the system comprising: a digital content provider to provide digital content; a user terminal to receive the digital content from the digital content provider, to change digital rights management (DRM) information of the received digital content, and to transmit the digital content having the changed DRM information; and a first external terminal to receive the digital content having changed DRM information.

Item 25. The system of item 24, wherein the user terminal includes: a DRM unit to change the DRM information of the received digital content; a content processing unit to encode the digital content having the changed DRM information; and a communication unit to transmit the encoded digital content to the first external terminal.

Item 26. The system of item 24 or 25, wherein the digital content provider includes: a DRM generating unit to generate the DRM information using a purchase condition of the digital content received by the user terminal; an encoding unit to encode the digital content having the generated DRM information and using identifying information about the user terminal to encode the digital content; and a communication unit to transmit the encoded digital content to the user terminal.

Item 27. The system of any of items 24 to 26, further comprising: a second external terminal to receive the digital content having changed DRM information.

Item 28. The system of item 27, wherein the second external terminal receives digital content transmitted from the first external terminal; and wherein the first external terminal changes the received digital content having DRM information to include modified DRM information.

Item 29. The system of item 28, wherein the first external terminal deletes or disables the received digital content having DRM information after transmitting it to the second external terminal.

Item 30. The system of item 29, wherein the digital content with modified DRM information is withdrawn from the second external terminal after the expiration of a rental period.
A user terminal, a method and a system for transmitting digital content. A user terminal receives digital content from a digital content provider, the digital contents include a digital rights management (DRM) unit to change DRM information of the received digital content; a content processing unit to encode the digital content having the changed DRM information; and a communication unit to transmit the encoded digital content to an external terminal.

## Claims

1. A user terminal to transmit digital content provided by a digital content provider, comprising:
a digital rights management (DRM) unit to change DRM information of the provided digital content;
a content processing unit to encode the provided digital content having the changed DRM information; and
a communication unit to transmit the encoded digital content to a first external terminal.

2. The user terminal of claim 1, wherein the DRM unit comprises an initial DRM area that is added to the digital content by the digital content provider, wherein, preferably, the initial DRM area comprises a changeable purchaser area and a non-changeable seller area, and the DRM unit changes DRM information recorded in the changeable purchaser area.

3. The user terminal of claim 1 or 2, wherein the encoded digital content is copied, transmitted and assigned to a second external terminal and is withdrawn from the first external terminal.

4. The user terminal of any of claims 1 to 3, further comprising:
a memory managing unit to perform a locking operation to disable usage of the digital content by the user terminal if the encoded digital content is transmitted to the first external terminal.

5. The user terminal of any of claims 1 to 4, wherein the DRM unit changes the changed DRM information if the encoded digital content is withdrawn from the first external terminal.

6. The user terminal of any of claims 1 to 5, wherein the user terminal obtains a plurality of licenses for the digital content from the digital content provider in one download.

7. The user terminal of any of claims 1 to 6, wherein the digital content provider encodes the digital content using at least one of a unique number or a personal certificate of the user terminal.

8. The user terminal of any of claims 1 to 7, wherein the content processing unit encodes the digital content using at least one of a unique number or a personal certificate of the first external terminal.

9. A method for transmitting digital content, the method comprising:
changing digital rights management (DRM) information of digital content provided by a digital content provider;
encoding the digital content having the changed DRM information; and
transmitting the encoded digital content to a first external terminal.

10. The method of claim 9, wherein the DRM information comprises an initial DRM area that is added to the digital content by the digital content provider,wherein, preferably, the initial DRM area further comprises a changeable purchaser area and a non-changeable seller area, and changing DRM information comprises changing DRM information recorded in the changeable purchaser area.

11. The method of claim 9 or 10, wherein the encoded digital content is copied, transmitted and assigned to a second external terminal and is withdrawn from the first external terminal.

12. The method of any of claims 9 to 11, further comprising:
performing a locking operation to disable usage of the digital content if the encoded digital content is transmitted to the first external terminal.

13. The method of any of claims 9 to 12, further comprising:
changing the changed DRM information if the encoded digital content is withdrawn from the first external terminal.

14. The method of any of claims 9 to 13, wherein a plurality of licenses of the digital content are obtained from the digital content provider in one download, the number of licenses denoting a provided quantity of the digital content.

15. The method of any of claims 9 to 14, wherein the digital content provider encodes the digital content using at least one of a unique number or a personal certificate of a user terminal receiving the digital content from the digital content provider.

16. The method of any of claims 9 to 15, wherein the encoding of the digital content comprises encoding the digital content using at least one of a unique number or a personal certificate of the first external terminal.

17. A system for transmitting digital content, the system comprising:
a digital content provider to provide digital content;
a user terminal to receive the digital content from the digital content provider, to change digital rights management (DRM) information of the received digital content, and to transmit the digital content having the changed DRM information; and
a first external terminal to receive the digital content having changed DRM information.

18. The system of claim 17, wherein the user terminal includes:
a DRM unit to change the DRM information of the received digital content;
a content processing unit to encode the digital content having the changed DRM information; and
a communication unit to transmit the encoded digital content to the first external terminal.

19. The system of claim 17 or 18, wherein the digital content provider includes:
a DRM generating unit to generate the DRM information using a purchase condition of the digital content received by the user terminal;
an encoding unit to encode the digital content having the generated DRM information and using identifying information about the user terminal to encode the digital content; and
a communication unit to transmit the encoded digital content to the user terminal.

20. The system of any of claims 17 to 19, further comprising:
a second external terminal to receive the digital content having changed DRM information, wherein, preferably, the second external terminal receives digital content transmitted from the first external terminal; and wherein the first external terminal changes the received digital content having DRM information to include modified DRM information.
